# EUROPEAN PATENT APPLICATION

(11) **EP 4 678 062 A1**
(43) Date of publication of application: **14.01.2026**
(21) Application number: 24221999.6
(22) Date of filing: 20.12.2024
(51) Int. Cl.: A47B 88/53

(54) **ANTI-PINCH PROTECTION COMPONENT, DRIVING DEVICE AND INTELLIGENT FURNITURE**

(30) Priority: 08.07.2024 CN 202410912439
(71) Applicant: Limoss (Dongguan) Co., Ltd., Dongguan City, Guangdong 523540 (CN)
(72) Inventor: GASSNER, Christian, Dongguan City, Guangdong 523540 (CN)
(74) Representative: Santarelli

(57) **Abstract**

The present disclosure relates to the technical field of anti-pinch devices, and relates to an anti-pinch protection component, a driving device and intelligent furniture. The anti-pinch protection component includes a load-bearing connecting structure (100), a movable pipe fitting (200) and an elastic holding structure (300); the elastic holding structure is accommodated in the movable pipe fitting and is elastically clamped with the movable pipe fitting; the load-bearing connecting structure penetrates through the movable pipe fitting and the elastic holding structure, the load-bearing connecting structure and the elastic holding structure move synchronously; the elastic holding structure is configured to be separated from the movable pipe fitting when subjected to a resistance exceeding the maximum resistance that the elastic holding structure is capable of withstanding. At this time, the elastic holding structure and the load-bearing connecting structure slide on the movable pipe fitting. The anti-pinch protection component combines the synchronous movement characteristics of the elastic holding structure and the load-bearing connecting structure with the detachable design between the elastic holding structure and the movable pipe fitting. When encountering obstacles, the anti-pinch protection mechanism can be triggered by both the resistance exerted from the inside and the resistance exerted from the outside, and so as to achieve the bidirectional anti-pinch function.

## Description

### CROSS REFERENCE TO RELATED APPLICATION

This application claims the benefit of and takes priority from Chinese Patent Application No. 202410912439.5 filed on 8 July 2024, the contents of which are herein incorporated by reference.

### TECHNICAL FIELD

The present disclosure relates to the technical field of anti-pinch devices, in particular to an anti-pinch protection component, a driving device and intelligent furniture.

### BACKGROUND

With the popularization of intelligent furniture in the modern life, products such as electric telescopic folding tables and electric movable island platforms are favored by consumers because of their convenience and functional diversity. However, operating mechanisms of the intelligent furniture bring security risks, especially in the process of stretching, folding or moving, which may pinch fingers of users or other objects. In order to solve the problem, many anti-pinch schemes based on electronic sensors or control systems, such as infrared, pressure or ultrasonic sensors, have been introduced in the market. These sensors can detect the contact with furniture components and stop or reverse the movement of furniture when necessary, thus reducing the possibility of accidents.

However, the existing anti-pinch technology still has limitations. Electronic sensors are greatly influenced by environmental conditions, such as changes in light, humidity or electromagnetic interference, which may lead to misjudgment or failure and reduce the reliability and stability of the system. The instability not only endangers the safety of users, but also damages the function and the life of intelligent furniture itself. In addition, the anti-pinch solution based on the control system usually needs complex software support and professional technical installation, which increases the manufacturing cost of products, increases the use and maintenance cost of users, and limits the popularization and market competitiveness of products.

Therefore, it is necessary to improve the above problems in order to change the current situation.

### SUMMARY

The present disclosure provides an anti-pinch protection component, a driving device and intelligent furniture, which are used to solve the existing problem that the anti-pinch device in intelligent furniture is poor in reliability and stability.

The present disclosure provides an anti-pinch protection component, including:
a movable pipe fitting;
an elastic holding structure, wherein the elastic holding structure is accommodated in the movable pipe fitting and is elastically clamped with the movable pipe fitting; and
a load-bearing connecting structure, wherein the load-bearing connecting structure penetrates through the movable pipe fitting and the elastic holding structure, and the load-bearing connecting structure and the elastic holding structure move synchronously;
wherein the elastic holding structure is configured to be separated from the movable pipe fitting when subjected to a resistance exceeding the maximum resistance that the elastic holding structure is capable of withstanding, and at this time, the elastic holding structure and the load-bearing connecting structure slide on the movable pipe fitting.

According to the anti-pinch protection component of any one of the above, the movable pipe fitting is provided with a sliding cavity and a sliding groove which are communicated with each other; the elastic holding structure is accommodated in the sliding cavity and is elastically clamped with the movable pipe fitting; and the load-bearing connecting structure penetrates through the sliding groove slidably.

According to the anti-pinch protection component of any one of the above, an inner wall of the sliding cavity is further provided with a limiting groove; the elastic holding structure includes a movable element and an elastic positioning element, the movable element is movably accommodated in the sliding cavity, and the elastic positioning element is installed on the movable element and is elastically clamped with the limiting groove.

According to the anti-pinch protection component of any one of the above, there are a plurality of groups of limiting grooves and elastic positioning elements; wherein the plurality of groups of limiting grooves are formed on the inner wall of the sliding cavity along the extension direction of the movable pipe fitting; the plurality of groups of elastic positioning elements are elastically provided in the movable element along the extension direction of the movable element; and the plurality of groups of elastic positioning elements are elastically clamped in the positions of the plurality of groups of limiting grooves in one-to-one correspondence.

According to the anti-pinch protection component of any one of the above, the elastic positioning element includes a reset spring and a positioning bead; an outer wall of the movable element is provided with an assembly hole; the reset spring and the positioning bead are installed in the assembly hole, and the reset spring acts on the positioning bead to keep the positioning bead always in a tendency to abut against the inner wall of the sliding cavity.

According to the anti-pinch protection component of any one of the above, the anti-pinch protection component further includes a trigger switch; an outer wall of the elastic holding structure is provided with a trigger recess; the trigger switch is fixedly connected to the movable pipe fitting and extends into the sliding cavity, and the trigger switch is matched with the trigger recess; when the elastic holding structure slides with respect to the movable pipe fitting, the trigger switch moves with respect to the trigger recess and triggers the trigger switch.

According to the anti-pinch protection component of any one of the above, the anti-pinch protection component further includes a trigger switch; an outer wall of the movable pipe fitting is provided with a trigger hole; the trigger switch is fixedly connected to the load-bearing connecting structure, and the trigger switch is matched with the trigger hole; when the load-bearing connecting structure slides with respect to the movable pipe fitting, the trigger switch moves with respect to the trigger hole and triggers the trigger switch.

According to the anti-pinch protection component of any one of the above, the load-bearing connecting structure includes a load-bearing connecting seat and a fastener; the load-bearing connecting seat is sleeved outside the movable pipe fitting; the fastener penetrates through the load-bearing connecting seat, the movable pipe fitting and the elastic holding structure, and the fastener penetrates through the sliding groove slidably at the same time.

The present disclosure further provides a driving device, including: a power element and an anti-pinch protection component according to any one of the above; wherein the power element is connected to a first external member; a load-bearing connecting structure in the anti-pinch protection component is connected to a second external member; wherein the power element is connected with a movable pipe fitting in the anti-pinch protection component to drive the movable pipe fitting to move.

The present disclosure further provides intelligent furniture, including:
a first movable element;
a second movable element; and
a driving device according to any one of the above, wherein the driving device is connected to the first movable element and the second movable element, respectively, and is configured to drive the first movable element to move with respect to the second movable element.

The embodiment of the present disclosure has the following beneficial effects.

The unique structural design of the anti-pinch protection component according to the present disclosure remarkably improves the safety performance and optimizes the functions. The anti-pinch protection component skillfully combines the synchronous movement characteristics of the elastic holding structure and the load-bearing connecting structure with the elastic detachable design between the elastic holding structure and the movable pipe fitting. When the anti-pinch protection component encounters obstacles in the working process, the anti-pinch protection mechanism can be triggered by both the resistance exerted from the inside and the resistance exerted from the outside. Specifically, the elastic holding structure is separated from the movable pipe fitting automatically when subjected to a resistance exceeding the maximum resistance that the elastic holding structure is capable of withstanding. Thereafter, the load-bearing connecting structure is allowed to slide on the movable pipe fitting together with obstacles, thus avoiding pinch accidents and achieving the real bidirectional anti-pinch function.

### BRIEF DESCRIPTION OF THE DRAWINGS

In order to illustrate the embodiments of the present disclosure or the technical scheme in the prior art more clearly, the drawings needed to be used in the description of the embodiments or the prior art will be briefly introduced hereinafter. Obviously, the drawings in the following description are only some embodiments of the present disclosure. Other drawings can be obtained according to these drawings without creative labor for those skilled in the art.

In the figures:
FIG. 1 is a schematic structural diagram of intelligent furniture according to an embodiment of the present disclosure.
FIG. 2 is a schematic structural diagram of a driving device according to an embodiment of the present disclosure.
FIG. 3 is a schematic structural diagram of an anti-pinch protection component according to an embodiment of the present disclosure.
FIG. 4 is a side view of an anti-pinch protection component according to an embodiment of the present disclosure.
FIG. 5 is a cross-sectional view taken along line A-A in FIG. 4.
FIG. 6 is a cross-sectional view taken along line B-B in FIG. 4.
FIG. 7 is an exploded view of an anti-pinch protection component according to an embodiment of the present disclosure.
FIG. 8 is a cross-sectional schematic structural diagram of an anti-pinch protection component according to another embodiment of the present disclosure.
FIG. 9 is a cross-sectional schematic structural diagram of an anti-pinch protection component according to still another embodiment of the present disclosure.

### Reference numerals:

1, driving device;
10, anti-pinch protection component;
100, load-bearing connecting structure; 110, load-bearing connecting seat; 120, fastener; 121, fixed hole; 130, sliding sleeve; 131, connecting hole; 140, locking pin;
200, movable pipe fitting; 210, sliding cavity; 220, sliding groove; 230, limiting groove; 240, trigger hole;
300, elastic holding structure; 310, movable element; 311, assembly hole; 312, trigger recess; 320, elastic positioning element; 321, reset spring; 322, positioning bead;
400, trigger switch;
20, power element;
2, first movable element; 3, second movable element.

### DETAILED DESCRIPTION OF THE EMBODIMENTS

In order to make the purpose, the technical schemes and the advantages of the present disclosure more clear, the technical schemes will be described clearly and completely hereinafter with reference to the attached drawings. Obviously, the described embodiments are some of the embodiments of the present disclosure, rather than all of the embodiments. Based on the embodiments of the present disclosure, all other embodiments obtained by those skilled in the art without any creative labor belong to the scope of protection of the present disclosure.

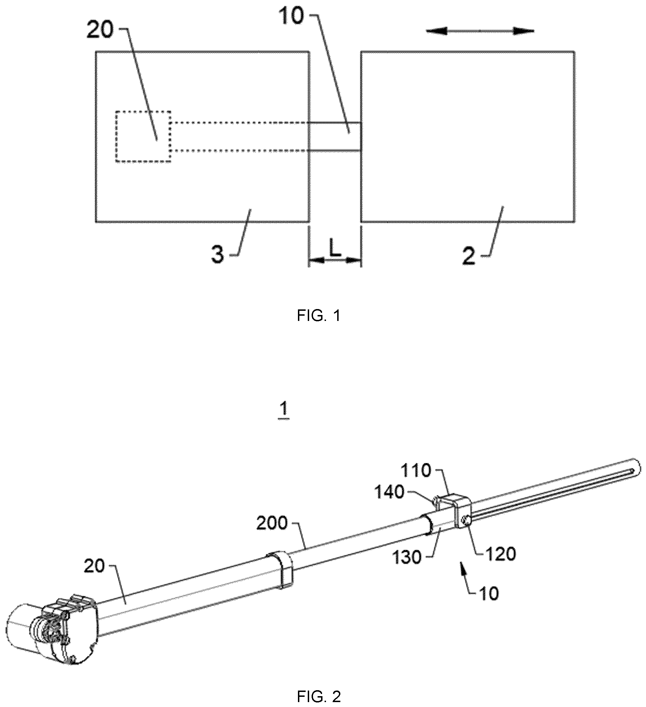

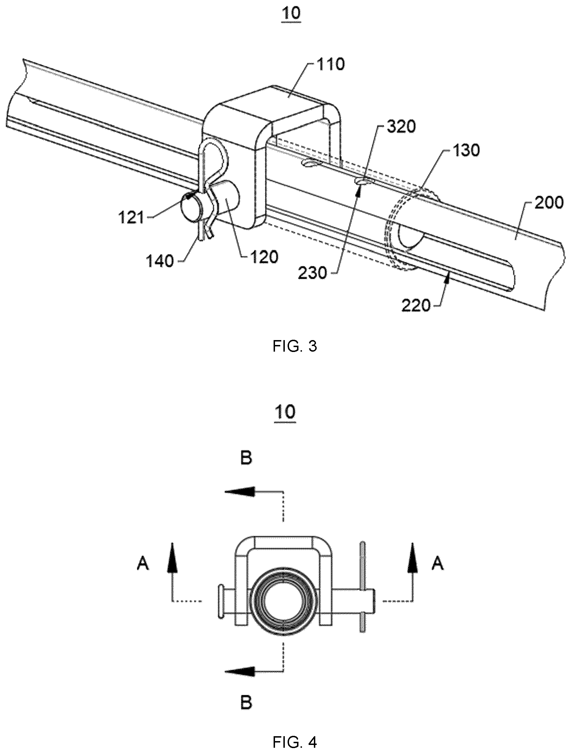

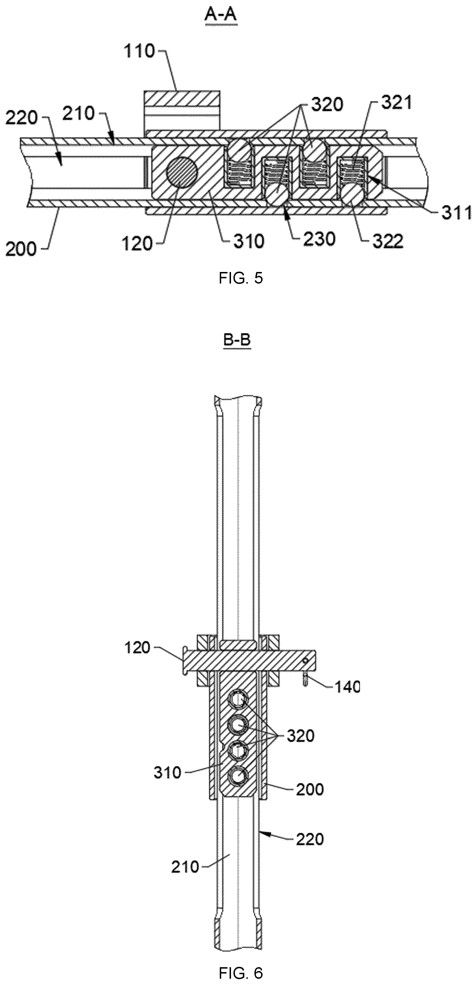

As shown in FIG. 1 to FIG. 9, an embodiment of the present disclosure provides intelligent furniture, which includes a driving device 1, a first movable element 2 and a second movable element 3. The driving device 1 is connected to the first movable element 2 and the second movable element 3, respectively, and is configured to drive the first movable element 2 to move with respect to the second movable element 3. The driving device 1 includes an anti-pinch protection component 10 and a power element 20. The power element 20 is connected to the second movable element 3 as the first external member, and the anti-pinch protection component 10 is connected to the first movable element 2 as the second external member. Specifically, the anti-pinch protection component 10 includes a load-bearing connecting structure 100, a movable pipe fitting 200 and an elastic holding structure 300. The elastic holding structure 300 is accommodated in the movable pipe fitting 200 and is elastically clamped with the movable pipe fitting 200. The load-bearing connecting structure 100 penetrates through the movable pipe fitting 200 and the elastic holding structure 300, and the load-bearing connecting structure 100 and the elastic holding structure 300 move synchronously. The elastic holding structure 300 is configured to be separated from the movable pipe fitting 200 when subjected to a resistance exceeding the maximum resistance that the elastic holding structure 300 is capable of withstanding, and at this time, the elastic holding structure 300 and the load-bearing connecting structure 100 slide on the movable pipe fitting 200. Of course, when the anti-pinch protection component 10 is applied to other devices, the installation methods of the first movable element 2 and the second movable element 3 can also be exchanged, which is not limited here.

The unique structural design of the anti-pinch protection component 10 according to the present disclosure remarkably improves the safety performance and optimizes the functions. The anti-pinch protection component 10 skillfully combines the synchronous movement characteristics of the elastic holding structure 300 and the load-bearing connecting structure 100 with the elastic detachable design between the elastic holding structure 300 and the movable pipe fitting 200. When the anti-pinch protection component 10 encounters obstacles in the working process, the anti-pinch protection mechanism can be triggered by both the resistance exerted from the inside and the resistance exerted from the outside. Specifically, the elastic holding structure 300 is separated from the movable pipe fitting 200 automatically when subjected to a resistance exceeding the maximum resistance that the elastic holding structure 300 is capable of withstanding. Thereafter, the load-bearing connecting structure 100 is allowed to slide on the movable pipe fitting 200 together with obstacles, thus avoiding pinch accidents and achieving the real bidirectional anti-pinch function. Specifically, the intelligent furniture includes, but is not limited to, an electric telescopic folding table and an electric movable island platform.

Specifically, the anti-pinch protection component 10 can overcome the elastic force of the elastic holding structure 300 to switch the power connection between the load-bearing connecting structure 100 and the movable pipe fitting 200 in the using process when the counter-acting force is greater than the elastic force of the elastic holding structure 300, regardless of whether the first movable element 2 and the second movable element 3 move towards or away from each other, thus achieving the bidirectional anti-pinch function.

Specifically, the load-bearing connecting structure 100 includes a load-bearing connecting seat 110 and a fastener 120. The load-bearing connecting seat 110 is connected to a first external member. The load-bearing connecting seat 110 is sleeved outside the movable pipe fitting 200. The fastener 120 penetrates through the load-bearing connecting seat 110, the movable pipe fitting 200 and the elastic holding structure 300, and the fastener 120 penetrates through the sliding groove 220 slidably at the same time. The power element 20 is in power connection with the movable pipe fitting 200, and the power element 20 is connected to the first external member. The movable pipe fitting 200 is provided with a sliding cavity 210 and a sliding groove 220 which are communicated with each other. The elastic holding structure 300 is accommodated in the sliding cavity 210 and is elastically clamped with the movable pipe fitting 200. The load-bearing connecting structure 100 penetrates through the sliding groove 220 slidably. The fastener 120 penetrates through the sliding groove 220. The fastener 120 is configured to move in the sliding groove 220 when the elastic holding structure 300 releases the movable pipe fitting 200 and the load-bearing connecting structure 100.

In this embodiment, the load-bearing connecting seat 110 is fixedly connected with the first external member. The elastic holding structure 300 is fixedly connected with the load-bearing connecting seat 110 through the fastener 120. When the movable pipe fitting 200 drives the second external member to move with respect to the first member, the elastic holding structure 300 fixes the movable pipe fitting 200 and the load-bearing connecting structure 100, that is, when there is no human body or other objects that need to be prevented from being pinched in the gap L between the first movable element 2 and the second movable element 3, the movable pipe fitting 200 can drive the first movable element 2 normally to move with respect to the second movable element 3. When there is an object that needs to be prevented from being pinched in the gap L, if the first movable element 2 and the second movable element 3 are in contact with the object, respectively, a counter-acting force will be applied to both the first movable element 2 and the second movable element 3. After the counter-acting force overcomes the elastic force of the elastic holding structure 300, the elastic holding structure 300 will be separated and released from the movable pipe fitting 200, and at this time, the movable pipe fitting 200 moves with respect to the elastic holding structure 300. At the same time, when the movable pipe fitting 200 moves with respect to the elastic holding structure 300, the fastener 120 moves with respect to the movable pipe fitting 200 in the sliding groove 220, so as to avoid motion interference between the fastener 120 and the movable pipe fitting 200. The structure is simple, and the overall structure is compact.

In an embodiment, an inner wall of the sliding cavity 210 is further provided with a limiting groove 230. The elastic holding structure 300 includes a movable element 310 and an elastic positioning element 320. The movable element 310 is movably accommodated in the sliding cavity 210. The elastic positioning element 320 is installed on the movable element 310 and is elastically clamped with the limiting groove 230.

With this arrangement, when there is no anti-pinch object in the gap L or the counter-acting force does not overcome the elastic force of the elastic positioning element 320, the elastic positioning element 320 can be clamped with the limiting groove 230 under the elastic action, and the load-bearing connecting structure 100 and the movable pipe fitting 200 are fixed through the movable element 310, respectively, so as to achieve the driving function of the movable pipe fitting 200. When the counter-acting force overcomes the elastic force of the elastic positioning element 320, the elastic positioning element 320 is ejected from the limiting groove 230 to disconnect the power connection between the load-bearing connecting structure 100 and the movable pipe fitting 200, so as to achieve the anti-pinch function. At the same time, the movable element 310 is in sliding fit with the sliding cavity 210 to guide the movement of the elastic holding structure 300.

Further, there are a plurality of groups of limiting grooves 230 and elastic positioning elements 320. The plurality of groups of limiting grooves 230 are formed on the inner wall of the sliding cavity 210 along the extension direction of the movable pipe fitting 200. The plurality of groups of elastic positioning elements 320 are elastically provided in the movable element 310 along the extension direction of the movable element 310. The plurality of groups of elastic positioning elements 320 are elastically clamped in the positions of the plurality of groups of limiting grooves 230 in one-to-one correspondence. With this arrangement, a plurality of groups of elastic positioning elements 320 is matched with a plurality of limiting grooves 230, the elastic force of the elastic holding structure 300 can be set according to the use requirements.

In an embodiment, the elastic positioning element 320 includes a reset spring 321 and a positioning bead 322. An outer wall of the movable element 310 is provided with an assembly hole 311. The reset spring 321 and the positioning bead 322 are installed in the assembly hole 311. The reset spring 321 acts on the positioning bead 322 to keep the positioning bead 322 always in a tendency to abut against the inner wall of the sliding cavity 210.

In this embodiment, the outer wall of the movable element 310 is provided with an assembly hole 311 for accommodating the elastic positioning element 320. The reset spring 321 and the positioning bead 322 are provided in the assembly hole 311, so that the overall structure of the elastic holding structure 300 can be compact, and the elastic positioning element 320 can be easily disassembled and maintained.

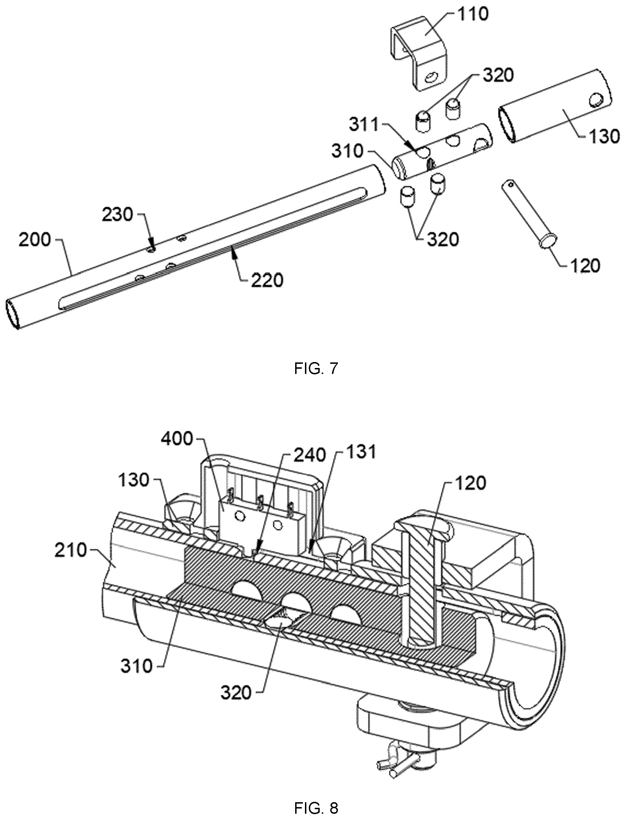

As shown in FIG. 8, in another embodiment, the anti-pinch protection component 10 further includes a trigger switch 400. An outer wall of the movable pipe fitting 200 is provided with a trigger hole 240. The trigger switch 400 is fixedly connected to the load-bearing connecting structure 100 and extends into the sliding cavity 210. The trigger switch 400 is matched with the trigger hole 240. When the elastic holding structure 300 slides with respect to the movable pipe fitting 200, the trigger switch 400 moves with respect to the trigger hole 240 and triggers the trigger switch 400.

In this embodiment, the trigger switch 400 is further provided to be matched with the movable pipe fitting 200, so that when the movable pipe fitting 200 displaces with respect to the load-bearing connecting structure 100, the trigger switch 400 can move with respect to the trigger hole 240 to change the trigger state of the trigger switch 400. When the intelligent furniture and/or the control module of the driving device 1 receive the state change signal of the trigger switch 400, it can be judged that the intelligent furniture is in the anti-pinch state and the power element 20 is powered off or controlled accordingly. With this arrangement, the trigger switch 400 is simultaneously matched with the elastic positioning element 320 to achieve the anti-pinch feedback function of the elastic holding structure 300. The elastic positioning element 320 of the mechanical part can ensure the anti-pinch reliability and stability of the elastic holding structure 300, and the trigger switch 400 can improve the anti-pinch accuracy and the response speed of the elastic holding structure 300, thereby improving the overall anti-pinch performance and the feedback speed of the elastic holding structure 300 with an excellent using effect.

Further, the load-bearing connecting structure 100 further includes a sliding sleeve 130. The sliding sleeve 130 is at least partially sleeved at the opening of the limiting groove 230, and the sliding sleeve 130 is connected to the fastener 120.

With this arrangement, the sliding sleeve 130 can protect the opening of the limiting groove 230 of the movable pipe fitting 200, so as to prevent dust and sundries from entering between the elastic holding structure 300 and the sliding cavity 210 from the limiting groove 230, from affecting the reliability of the elastic holding structure 300, or from causing the elastic holding structure 300 to be stuck, thereby improving the reliability of the anti-pinch protection component 10.

When the sliding sleeve 130 is applied to the embodiment of providing the trigger switch 400, the sliding sleeve 130 is provided with a connecting hole 131, and the trigger switch 400 is connected to the sliding sleeve 130 and penetrates through the connecting hole 131.

The sliding sleeve 130 is matched with the movable pipe fitting 200, so that the trigger switch 400 can be fixedly installed on the sliding sleeve 130. In this way, the combined structure of the sliding sleeve 130 and the trigger switch 400 is compact, and the trigger reliability of the trigger switch 400 is ensured.

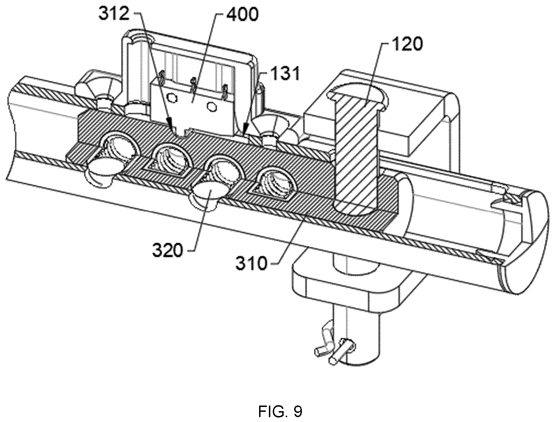

As shown in FIG. 9, in another embodiment, the anti-pinch protection component 10 further includes a trigger switch 400 electrically connected with the power element 20. An outer wall of the elastic holding structure 300 is provided with a trigger recess 312. The trigger switch 400 is fixedly connected to the movable pipe fitting 200 and extends into the sliding cavity 210, and the trigger switch 400 is matched with the trigger recess 312. When the force applied to the first external member is greater than the elastic force of the elastic holding structure 300, the elastic holding structure 300 slides with respect to the movable pipe fitting 200, so that the trigger switch 400 moves with respect to the trigger recess 312 and triggers the trigger switch 400.

In this embodiment, the trigger switch 400 is further provided to be matched with the movable element 310, so that when the movable pipe fitting 200 displaces with respect to the load-bearing connecting structure 100, the trigger switch 400 can move with respect to the trigger recess 312 to change the trigger state of the trigger switch 400. When the intelligent furniture and/or the control module of the driving device 1 receive the state change signal of the trigger switch 400, it can be judged that the intelligent furniture is in the anti-pinch state and the power element 20 is powered off or controlled accordingly. With this arrangement, the trigger switch 400 is simultaneously matched with the elastic positioning element 320 to achieve the anti-pinch feedback function of the elastic holding structure 300. The elastic positioning element 320 of the mechanical part can ensure the anti-pinch reliability and stability of the elastic holding structure 300, and the trigger switch 400 can improve the anti-pinch accuracy and the response speed of the elastic holding structure 300, thereby improving the overall anti-pinch performance and the feedback speed of the elastic holding structure 300 with an excellent using effect.

Specifically, the fastener 120 is provided with a fixed hole 121. The load-bearing connecting structure 100 further includes a locking pin 140. The fastener 120 penetrates through the movable element 310. The locking pin 140 penetrates through the fixed hole 121.

When the anti-pinch protection component 10 of this embodiment is assembled, first, the fastener 120 penetrates through the load-bearing connecting seat 110 and the movable element 310 in sequence. Thereafter, the locking pin 140 is connected with the fixed hole 121 at the position into which the fastener 120 extends, so that the fastener 120 can be fixed with the load-bearing connecting seat 110. The structure is simple, and it is convenient to assemble and disassemble.

In an embodiment, the load-bearing connecting structure 100 further includes a positioning sleeve. The positioning sleeve penetrates through the load-bearing connecting seat 110, and the fastener 120 penetrates through the positioning sleeve.

In this embodiment, the positioning sleeve is provided to be matched with the fastener 120, so as to facilitate the installation and positioning of the fastener 120. At the same time, the connection stability and accuracy between the fastener 120 and the load-bearing connecting seat 110 can be improved. In the subsequent use of the anti-pinch protection component 10, when there is a gap between the load-bearing connecting structure 100 and the movable pipe fitting 200, the positioning sleeve can be replaced, and the maintenance cost can be reduced.

In the description of the embodiments of the present disclosure, it should be noted that the orientational or positional relationships indicated by the terms "center", "longitudinal", "lateral", "upper", "lower", "front", "rear", "left", "right", "vertical", "horizontal", "top", "bottom", "inside" and "outside" are based on the orientational or positional relationships shown in the drawings only for the convenience of describing the embodiments of the present disclosure and simplifying the description, rather than indicate or imply that the referred devices or elements must have a specific orientation, be constructed and operated in a specific orientation, and therefore should not be construed as limiting the present disclosure. In addition, the terms such as "first", "second" and "third" are only used for the purpose of description, and cannot be understood as indicating or implying relative importance.

In the embodiments of the description of the present disclosure, it should be noted that unless otherwise specified and defined expressly, the terms such as "link" and "connect" should be understood broadly, for example, it can be fixed connection, detachable connection or integral connection; or mechanical connection or electrical connection; or direct connection or indirect connection through an intermediate medium. For those skilled in the art, the specific meanings of the above terms in the embodiments of the present disclosure can be understood according to specific situations.

In the embodiment of the present disclosure, unless otherwise specified and defined, the first feature "above" or "below" the second feature may be the direct contact between the first feature and the second feature, or the indirect contact between the first feature and the second feature through an intermediate medium. Further, the first feature is "on", "above" and "over" the second feature, indicating that the first feature is directly above or obliquely above the second feature, or only indicating that the horizontal height of the first feature is higher than that of the second feature. The first feature is "below", "under" and "underneath" the second feature, indicating that the first feature is directly under or obliquely under the second feature, or only indicating that the horizontal height of the first feature is lower than that of the second feature.

In the description of this specification, the description referring to the terms "one embodiment", "some embodiments", "examples", "specific examples" or "some examples" means that the specific features, structures, materials or characteristics described in connection with this embodiment or example are included in at least one embodiment or example of the present disclosure. In this specification, the schematic expressions of the above terms do not necessarily refer to the same embodiment or example. Further, the specific features, structures, materials or characteristics described may be combined in any one or more embodiments or examples in a suitable manner. In addition, those skilled in the art can incorporate and combine different embodiments or examples and features of different embodiments or examples described in this specification without contradicting each other.

Finally, it should be explained that the above embodiments are only used to illustrate the technical schemes of the present disclosure, rather than limit the technical schemes. Although the present disclosure has been described in detail with reference to the foregoing embodiments, those skilled in the art should understand that it is still possible to modify the technical schemes described in the foregoing embodiments, or to replace some technical features equivalently. However, these modifications or substitutions do not make the essence of the corresponding technical schemes deviate from the spirit and the scope of the technical schemes of various embodiments of the present disclosure.

## Claims

1. An anti-pinch protection component, comprising:
a movable pipe fitting;
an elastic holding structure, wherein the elastic holding structure is accommodated in the movable pipe fitting and is elastically clamped with the movable pipe fitting; and
a load-bearing connecting structure, wherein the load-bearing connecting structure penetrates through the movable pipe fitting and the elastic holding structure, and the load-bearing connecting structure and the elastic holding structure move synchronously;
wherein the elastic holding structure is configured to be separated from the movable pipe fitting when subjected to a resistance exceeding the maximum resistance that the elastic holding structure is capable of withstanding, and at this time, the elastic holding structure and the load-bearing connecting structure slide on the movable pipe fitting.

2. The anti-pinch protection component according to claim 1, wherein the movable pipe fitting is provided with a sliding cavity and a sliding groove which are communicated with each other; the elastic holding structure is accommodated in the sliding cavity and is elastically clamped with the movable pipe fitting; and the load-bearing connecting structure penetrates through the sliding groove slidably.

3. The anti-pinch protection component according to claim 2, wherein an inner wall of the sliding cavity is further provided with a limiting groove; the elastic holding structure comprises a movable element and an elastic positioning element, the movable element is movably accommodated in the sliding cavity, and the elastic positioning element is installed on the movable element and is elastically clamped with the limiting groove.

4. The anti-pinch protection component according to claim 3, wherein there are a plurality of groups of limiting grooves and elastic positioning elements; wherein the plurality of groups of limiting grooves are formed on the inner wall of the sliding cavity along the extension direction of the movable pipe fitting; the plurality of groups of elastic positioning elements are elastically provided in the movable element along the extension direction of the movable element; and the plurality of groups of elastic positioning elements are elastically clamped in the positions of the plurality of groups of limiting grooves in one-to-one correspondence.

5. The anti-pinch protection component according to claim 3, wherein the elastic positioning element comprises a reset spring and a positioning bead; an outer wall of the movable element is provided with an assembly hole; the reset spring and the positioning bead are installed in the assembly hole, and the reset spring acts on the positioning bead to keep the positioning bead always in a tendency to abut against the inner wall of the sliding cavity.

6. The anti-pinch protection component according to claim 2, wherein the anti-pinch protection component further comprises a trigger switch; an outer wall of the elastic holding structure is provided with a trigger recess; the trigger switch is fixedly connected to the movable pipe fitting and extends into the sliding cavity, and the trigger switch is matched with the trigger recess; when the elastic holding structure slides with respect to the movable pipe fitting, the trigger switch moves with respect to the trigger recess and triggers the trigger switch.

7. The anti-pinch protection component according to claim 2, wherein the anti-pinch protection component further comprises a trigger switch; an outer wall of the movable pipe fitting is provided with a trigger hole; the trigger switch is fixedly connected to the load-bearing connecting structure, and the trigger switch is matched with the trigger hole; when the load-bearing connecting structure slides with respect to the movable pipe fitting, the trigger switch moves with respect to the trigger hole and triggers the trigger switch.

8. The anti-pinch protection component according to any one of claims 2 to 7, wherein the load-bearing connecting structure comprises a load-bearing connecting seat and a fastener; the load-bearing connecting seat is sleeved outside the movable pipe fitting; the fastener penetrates through the load-bearing connecting seat, the movable pipe fitting and the elastic holding structure, and the fastener penetrates through the sliding groove slidably at the same time.

9. A driving device, comprising: a power element and an anti-pinch protection component according to any one of claims 1 to 8; wherein the power element is connected to a first external member; a load-bearing connecting structure in the anti-pinch protection component is connected to a second external member; wherein the power element is connected with a movable pipe fitting in the anti-pinch protection component to drive the movable pipe fitting to move.

10. Intelligent furniture, comprising:
a first movable element;
a second movable element; and
a driving device according to claim 9, wherein the driving device is connected to the first movable element and the second movable element, respectively, and is configured to drive the first movable element to move with respect to the second movable element.
